# EUROPÄISCHE PATENTANMELDUNG

(11) **EP 0 740 448 A2**
(43) Veröffentlichungstag der Anmeldung: **30.10.1996**
(21) Anmeldenummer: 96100590.7
(22) Anmeldetag: 17.01.1996
(51) Int. Cl.: H04M 1/66

(54) **Verfahren zur Verbindungsaufbau Sperre/-Freigabe im Telefonnetz-ISDN**

(30) Priorität: 25.04.1995 DE 19515105
(71) Anmelder: Deutsche Telekom AG, 53113 Bonn (DE)
(72) Erfinder: Hartmann, Ulrich, Dipl.-Ing., D-64291 Darmstadt (DE); Schellhaas, Werner, D-64372 Ober-Ramstadt (DE)

(57) **Zusammenfassung**

2.1. Die Erfindung soll eine einfache Lösung beinhalten, die Manipulationen durch unberechtigte Personen im Bereich der Endeinrichtung (EE) und im Anschlußleitungsnetzbereich weitestgehend unterbindet.
2.2. Die erfindungsgemäße Lösung beruht auf der gezielten Aktivierung bzw. Deaktivierung eines besonderen Dienstmerkmals (BDM), das eine als "Individuelle Sperre" bezeichnete Sperrfunktion beinhaltet. Bei jedem Verbindungsaufbauversuch wird in der Vermittlungseinrichtung (VE) automatisch geprüft, ob die ersten empfangenen Wählzeichen mit den Wählzeichen übereinstimmen, die in der Vermittlungseinrichtung (VE) für den Anschluß in Form eines Einzel-Freigabe-Codes gespeichert sind. Wenn das der Fall ist, wird die Sperrfunktion "Individuelle Sperre" für die nachfolgende Zielrufnummer aufgehoben und die Verbindung hergestellt. Nach Auslösen der Verbindung wird die Sperrfunktion "Individuelle Sperre" automatisch wieder aktiviert.
2.3. Die erfindungsgemäße Lösung ist sowohl für AnTelAs (Analoge Telefonanschlüsse) und Univ/E-ISDN-As (Universal-/Euro-ISDN-Anschlüsse) von digitalen Vermittlungseinrichtungen (VE) als auch für analoge Telefonanschlüsse von analogen Vermittlungseinrichtungen (VE) geeignet.

## Beschreibung

Die erfindungsgemäße Lösung ist sowohl für AnTelAs (Analoge Telefonanschlüsse) und Univ/E-ISDN-As (Universal-/Euro-ISDN-Anschlüsse) von digitalen Vermittlungseinrichtungen VE als auch für Analoge Telefonanschlüsse von analogen Vermittlungseinrichtungen VE konzipiert. Mittels der erfindungsgemäßen Lösung sollen Wählprozeduren an Anschlüssen so gestaltet werden, daß sie möglichst manipulationssicher, sowohl im Bereich des Anschlusses beim Kunden als auch im Bereich des Anschlußleitungsnetzes sind.

Gemäß bekanntem Stand der Technik ist es möglich, innerhalb einer Komfort-Endeinrichtung (z. B. Telefon) Sperren für das Herstellen von Verbindungen zu aktivieren und zu deaktivieren. Dadurch soll verhindert werden, daß nicht autorisierte Nutzer entgeltpflichtige Verbindungen von der Endeinrichtung EE aus herstellen können. Bekannte Sperren sind:
- Gesamtsperre
   (Sperre aller abgehenden Verbindungen)
- Direktruf/Babyruf
- Sperrkreise
- Freikreise

**"Gesamtsperre**" bedeutet, daß in der Regel nach Eingabe einer Prozedur mittels PIN oder durch einen mechanischen Schlüsselschalter die Endeinrichtung EE eine Aussendung von Wahlinformationen unterbindet; meistens ist auch die Wahl der Notrufnummern (110 und 112) dadurch verhindert. Kommend gerichtete Verbindungen dagegen können angenommen werden.

**"Direktruf**"/"Babyruf" ist eine Abwandlung der Gesamtsperre, wobei die Endeinrichtung EE nach Belegung (Hörer abgenommen) durch eine beliebige Tastenbetätigung die in der Endeinrichtung EE gespeicherte, vorher eingegebene Rufnummer wählt.

**"Sperrkreise**" werden nach Eingabe einer Prozedur mit PIN aktiviert und verhindern die Wahl von bestimmten zuvor in der Endeinrichtung EE eingegebenen und gespeicherten Ziel-Rufnummern oder Zeichenfolgen. Damit kann z. B. das Anwählen von Anschlüssen im Ausland, eine Anwahl über die Fernebene oder die Anwahl von bestimmten Ziel-Bereichen (z.B. 0190 ...) verhindert werden. Ziele mit nicht gesperrten Rufnummern sind weiterhin erreichbar.

**"Freikreise**" werden ebenfalls nach Eingabe einer Prozedur mit PIN aktiviert und erlauben nur die zuvor in der Endeinrichtung EE hinterlegten Ziel-Rufnummern zu wählen. Alle anderen Zeichenfolgen werden von der Endeinrichtung EE nicht ausgesandt.

Die oben aufgeführten Möglichkeiten werden bisher fast ausschließlich in der Endeinrichtung EE realisiert und unterliegen der Manipulation durch Umstecken von nicht gesperrten Endeinrichtungen EE an diesem Anschluß oder durch Manipulation in der Hausinstallation. Es ist beispielsweise eine Sperreinrichtung mit TAE-Sicherung (mittels Schlüssel verriegelbar) bekannt, die das Abtrennen sowohl der Sperreinrichtung als auch der nachgeschalteten Endeinrichtung EE verhindern soll. Die mittels dieser Sperreinrichtung gesicherte Endeinrichtung EE kann jedoch innerhalb der Hausinstallation, insbesondere durch Aufschaltung auf einen Hausverteiler, umgangen werden.

Für das Telefonnetz/ISDN der Deutschen Telekom ist beabsichtigt, für den einzelnen Anschluß neben dem Dienstmerkmal Gesamtsperre zusätzlich bzw. alternativ 20 Sperrkreise mit bis zu 5-stelligen Ziffernfolgen kundenindividuell zuzulassen. Dies bedeutet, daß der Kunde (Teilnehmer) selbst mittels Prozedur bestimmte, von ihm festgelegte Ziffernfolgen eingeben und somit den Verbindungsaufbau zu Zielen, deren Rufnummer mit diesen Ziffern beginnen oder aus dieser Ziffernfolge bestehen, sperren kann. Dies führt in der Vermittlungseinrichtung VE zu einem hohen Speicheraufwand. Auch kann das Editieren (Neueingaben, Änderungen und Löschungen von Ziffernfolgen) nur mit hohem Software-Aufwand benutzerfreundlich gestaltet werden (z. B. mittels Hinweistönen oder Ansagen).

Ziel der Erfindung ist eine einfache Lösung, die es ermöglicht, Manipulationen durch unberechtigte Personen im Bereich der Endeinrichtung EE und im Anschlußleitungsnetzbereich weitestgehend zu unterbinden. Die erfindungsgemäße Lösung soll kostengünstig sein und ohne großen Aufwand sowohl in der Vermittlungseinrichtung VE als auch in der Endeinrichtung EE realisierbar sein. Desweiteren soll die durch den Kunden durchzuführende Freigabeprozedur möglichst einfach ausführbar und auf wenige Funktionen beschränkt sein.

Die erfindungsgemäße Lösung basiert auf der zweckmäßigen Ausgestaltung und Anwendung der im Telefonnetz/ISDN bereits bekannten Dienstmerkmale für Gesamt- oder Teilsperren des gehend gerichteten Verkehrs. Die erfindungsgemäße Lösung beinhaltet die gezielte Aktivierung bzw Deaktivierung eines besonderen Dienstmerkmals BDM, das als "Individuelle Sperre" bezeichnet wird. Dieses besondere Dienstmerkmal BDM, das von seinem Konzept an das bereits bekannte Dienstmerkmal Gesamtsperre angelehnt ist und auch als Gesamtsperre gegenüber allen abgehenden Verbindungen wirkt, besitzt jedoch eine weit höhere Flexibilität als das als Gesamtsperre bekannte Dienstmerkmal. So wird durch die Freigabe bzw. die Aufrechterhaltung des besonderen Dienstmerkmals BDM "Individuelle Sperre" für jeden Verbindungsaufbauversuch auch individuell anhand des Einzel-Freigabe-Codes entschieden, ob er freigegeben oder gesperrt wird. Der Unterschied zum Dienstmerkmal Gesamtsperre besteht insbesondere darin, daß beim Dienstmerkmal BDM "Individuelle Sperre", jeweils für einen Verbindungsaufbau(versuch), die Sperrfunktion aufgehoben und nach Auslösen der Verbindung automatisch wieder aktiviert wird.

Die erfindungsgemäße Lösung soll anhand eines Ausführungsbeispiels für ein Komforttelefon näher erläutert werden.

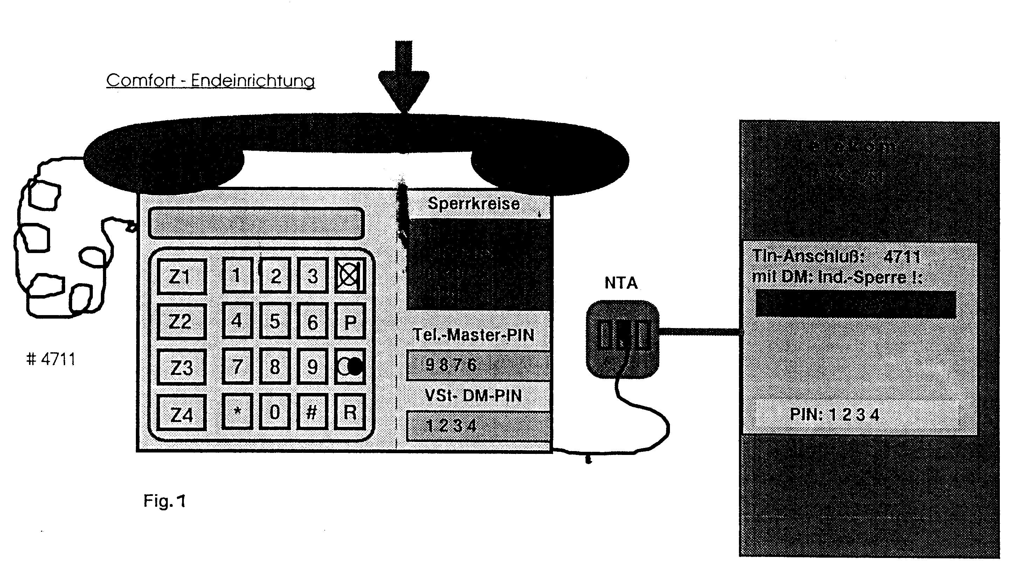

Fig. 1 zeigt das Wirkprinzip der erfindungsgemäßen Lösung.

Erfindungsgemäß werden durch einen Zugriffsberechtigten/Master in einem dafür vorgesehenen Speicher im Komforttelefon die Bedingungen für die Teilnahme am Telefondienstverkehr eingespeichert. Die eingespeicherten Sperrkreise/Freikreise werden anschließend mit einem Berechtigungsnachweis für die Freigabe der Endeinrichtung EE in Form eines Einzel-Freigabe-Codes für das besondere Dienstmerkmal BDM "Individuelle Sperre" in Verbindung mit der PIN für den Anschluß verknüpft und somit gesichert. Bei jedem Verbindungsaufbauversuch eines Nutzers wird im Komforttelefon geprüft, ob die gewählte Rufnummer den im Komforttelefon einprogrammierten Bedingungen entspricht. Wenn das der Fall ist, wird vor der eigentlichen Wahlinformation automatisch der Einzel-Freigabe-Code in Verbindung mit der in der Vermittlungseinrichtung VE hinterlegten PIN zur Vermittlungseinrichtung VE übertragen.

Dabei kann die Endeinrichtung EE mit einem Kennungsgeber ausgestattet sein, der bei interner Freigabe eines Verbindungsaufbaus zu der Ziel-Rufnummer in der Endeinrichtung EE automatisch den Einzel-Freigabe-Code des besonderen Dienstmerkmals BDM "Individuelle Sperre" einschließlich der PIN der eigentlichen Ziel-Rufnummer voranstellt und an die Vermittlungseinrichtung VE überträgt. Wenn die Einzel-Freigabe-Prozedur und die PIN richtig eingegeben werden, wird der Verbindungsaubau für den Anschluß freigegeben und die gewünschte Verbindung zur Ziel-Rufnummer kann hergestellt werden.
Alternativ kann die Aufgabe auch durch die Kopplung der Endeinrichtung EE mit einem Chipkartenleser gelöst werden. Hierbei werden nur dann Verbindungswünsche entgegengenommen, wenn durch Stecken der Chipkarte am Lesegerät der Endeinrichtung EE eine Berechtigung erkannt wird. Eine weiter Ausgestaltung besteht darin, daß in den Speicher der Chipkarte Ziffernfolgen für Kurzwahl-Rufnummern eingespeichert sind, die in Verbindung mit der erfindungsgemäßen Freigabeprozedur bei Bedarf über die Endeinrichtung EE an die Vermittlungseinrichtung VE übertragen werden können.
Bei korrektem Einzel-Freigabe-Code und bei Übereinstimmung der PIN mit der für das Komforttelefon in der Vermittlungseinrichtung VE hinterlegten PIN, wird das für das Komforttelefon in der Vermittlungseinrichtung VE als Gesamtsperre geschaltete besondere Dienstmerkmal BDM "Individuelle Sperre" für die der Freigabeprozedur nachgeordnete Wahlinformation (Ziel-Rufnummer) aufgehoben. Dadurch werden die Wähleinrichtungen der Vermittlungseinrichtung VE freigegeben und die vom Nutzer gewünschte Verbindung für das Komforttelefon kann hergestellt werden. Nachdem der Nutzer die Verbindung ausgelöst hat, wird das besondere Dienstmerkmal BDM "Individuelle Sperre" automatisch wieder für den Anschluß aktiviert. Dadurch werden alle über den Anschluß gewünschten Verbindungsaufbauversuche wieder entsprechend der erfindungsgemäßen Lösung auf Berechtigung geprüft.

Der Vorteil bei der Anwendung der erfindungsgemäßen Lösung in Verbindung mit Endeinrichtungen EE mit höherem Komfort liegt insbesondere darin, daß die Programmierung von Sperrkreisen oder Freikreisen oder Gesamt- bzw. Direktrufsperre voll und ganz in der Endeinrichtung EE realisiert werden kann. Dies bedeutet einen hohen Komfort bzgl. der Bedienung (über Display etc.) und gute Handhabbarkeit der Komfort-Endeinrichtung EE und Entlastung der Vermittlungseinrichtung VE von je Anschluß zu speichernden Zeichen einer größeren Anzahl alternativer Sperrkreise (z. B. 20 Sperrkreise zu je fünf Zeichen).

Eine Manipulation ist ohne höheren technischen Aufwand ausgeschlossen (vergleichbar mit Datex-J oder Telefon-Banking). Die zuvor genannten Schwachstellen durch Austausch der Endeinrichtung EE oder Eingriffe in der Hausinstallation entfallen oder sind wesentlich erschwert. Die eigentliche Sperre bzw. Verhinderung unerlaubten Zugriffs geschieht in der Vermittlungseinrichtung VE. Es muß lediglich ein kleiner Speicherbereich mit PIN in der Vermittlungseinrichtung VE zur Verfügung gestellt werden.

Ein weiterer Vorteil dieses Verfahrens mit einem Komforttelefon ist, daß keine Wahlstufen, Leitungen usw. in der Vermittlungseinrichtung VE unnötig belegt werden, d. h., Verbindungsaufbauversuche zu ausgeschlossenen Zielen werden nicht freigegeben.

Ein weiterer Vorteil besteht darin, daß das besondere Dienstmerkmal BDM "Individuelle Sperre" durch Eingabe eines vorgesehenen allgemeinen Freigabe-Codes in Verbindung mit dem Telefonnetz/ISDN-PIN aufgehoben werden kann. Dadurch ist der Anschluß generell freigeschaltet und es können beliebig oft Verbindungen aufgebaut werden, ohne daß die Freigabe-Prozedur, wie sonst bei einfachen Endeinrichtungen EE erforderlich, bei mehreren nacheinander herzustellenden Verbindungen durch den Berechtigten für jede einzelne Verbindung jedesmal wiederholt werden muß. Anschließend kann für den Anschluß das besondere Dienstmerkmal BDM "Individuelle Sperre" wieder aktiviert werden.

## Patentansprüche

1. Verfahren zur Verbindungsaufbau-Sperre/-Freigabe im Telefonnetz/ISDN unter Verwendung des Prinzips der Gesamtsperre für alle abgehenden Verbindungen, **dadurch gekennzeichnet**, daß jeder Verbindungsaufbauversuch von einer Endeinrichtung (EE) eine anschlußindividuelle Freigabeprozedur erfordert, die der eigentlichen Wahlinformation vorangestellt ist, daß die Freigabeprozedur, die einen aus einer Folge von nacheinander angeordneten Wählzeichen bestehenden Einzel-Freigabe-Code beinhaltet, unmittelbar vor der eigentlichen Wahlinformation über den Anschluß zur Vermittlungseinrichtung (VE) übertragen wird, daß in der Vermittlungseinrichtung (VE) der übertragene Einzel-Freigabe-Code mit dem Einzel-Freigabe-Code eines für den betreffenden Anschluß geschalteten "besonderen Dienstmerkmals" (BDM) "Individuelle Sperre", das wie eine Gesamtsperre für alle abgehenden Verbindungen wirkt, verglichen wird, daß bei Übereinstimmung des über den Anschluß übertragenen Einzel-Freigabe-Codes mit dem in der Vermittlungseinrichtung (VE) für das besondere Dienstmerkmal (BDM) "Individuelle Sperre" festgelegten Einzel-Freigabe-Codes die "Individuelle Sperre" für die der Freigabeprozedur nachgeordnete Wahlinformation aufgehoben wird, daß über die Wähleinrichtungen der Vermittlungseinrichtung (VE) die gewünschte Verbindung für den Anschluß hergestellt wird, und daß durch das Auslösen der Verbindung das besondere Dienstmerkmal (BDM) "Individuelle Sperre" für den betreffenden Anschluß automatisch wieder als Gesamtsperre aktiviert wird.

2. Verfahren nach Anspruch 1, dadurch gekennzeichnet, daß vor der eigentlichen Wahlinformation der Einzel-Freigabe-Code in Verbindung mit der in der Vermittlungseinrichtung (VE) hinterlegten PIN eingegeben und zur Vermittlungseinrichtung (VE) übertragen wird, daß bei Übereinstimmung des Einzel-Freigabe-Codes mit dem für das besondere Dienstmerkmal (BDM) "Individuelle Sperre" vorgesehenen Einzel-Freigabe-Code und bei Übereinstimmung der übertragenen PIN mit der in der Vermittlungseinrichtung (VE) hinterlegten PIN das besondere Dienstmerkmal (BDM) "Individuelle Sperre" aufgehoben und über die Wähleinrichtungen der Vermittlungseinrichtung (VE) für die der Freigabeprozedur nachgeordnete Wahlinformation die gewünschte Verbindung hergestellt wird, und daß nach Auslösen der Verbindung das besondere Dienstmerkmal (BDM) "Individuelle Sperre" für den betreffenden Anschluß automatisch wieder als Gesamtsperre aktiviert wird.

3. Verfahren zur Verbindungsaufbau-Sperre/-Freigabe nach Anspruch 1 und 2, dadurch gekennzeichnet, daß in einer höherwertigen Endeinrichtung (EE) durch einen Zugriffsberechtigten/Master die Bedingungen für die Teilnahme am Telekommunikationsverkehr eingespeichert und mit dem Einzel-Freigabe-Code für das besondere Dienstmerkmal (BDM) "Individuelle Sperre" und der in der Vermittlungseinrichtung (VE) für die Endeinrichtung (EE) hinterlegten PIN verknüpft werden, daß bei jedem Wahlversuch, bei dem die in der Endeinrichtung (EE) einprogrammierten Bedingungen eingehalten werden, vor der eigentlichen Wahlinformation automatisch der in der Endeinrichtung (EE) eingespeicherte Einzel-Freigabe-Code für das besondere Dienstmerkmal (BDM) "Individuelle Sperre" in Verbindung mit der in der Vermittlungeinrichtung (VE) hinterlegten PIN zur Vermittlungseinrichtung (VE) übertragen wird, und daß bei einer in der Endeinrichtung (EE) als unzulässig erkannten Wahlinformation keine Aussendung der Freigabe-Prozedur mit Einzel-Freigabe Code für das besondere Dienstmerkmal (BDM) "Individuelle Sperre" in Verbindung mit der PIN und keine Aussendung der Zielrufnummer zur Vermittlungeinrichtung (VE) erfolgt.

4. Verfahren zur Verbindungsaufbau-Sperre/-Freigabe nach Anspruch 1, 2 und 3, dadurch gekennzeichnet, daß ein Verbindungsaufbau zu den Notrufnummern 110 und 112, sowie zu den vom Netzbetreiber festgelegten Service-Anschlüssen auch bei aktiviertem besonderen Dienstmerkmal (BDM) "Individuelle Sperre" möglich ist.
